# EUROPÄISCHE PATENTSCHRIFT

(11) **EP 0 774 369 B1**
(45) Veröffentlichungstag und Bekanntmachung des Hinweises auf die Patenterteilung: **01.09.1999**
(21) Anmeldenummer: 96117646.8
(22) Anmeldetag: 04.11.1996
(51) Int. Cl.: B60G 21/05

(54) **Verbundlenker-Hinterachse**
Twist beam rear axle
Essieu arrière à traverse déformable en torsion

(30) Priorität: 15.11.1995 DE 19542522
(43) Veröffentlichungstag der Anmeldung: 21.05.1997
(73) Patentinhaber: ADAM OPEL AG, 65423 Rüsselsheim (DE)
(72) Erfinder: Reintgen, Peter, Dipl.-Ing., 65232 Taunusstein (DE); Stoll, Helmut, Dipl.-Ing., 64569 Nauheim (DE); Schmidt, Rudolf, 65428 Rüsselsheim (DE); Pelz, Gerhard, Dipl.-Ing., 55576 Welgesheim (DE)
(74) Vertreter: Bergerin, Ralf, Dipl.-Ing.

(56) Entgegenhaltungen:
- EP-A- 0 681 932
- DE-A- 4 326 535

## Beschreibung

Die Erfindung betrifft eine Verbundlenker-Hinterachse für Kraftfahrzeuge mit zwei radtragenden, schwenkbar am Aufbau angelenkten starren Längslenkern, welche zumindest um eine quer zur Fahrtrichtung angeordnete Schwenkachse schwingen, und einer zwischen den Längslenkern parallel und beabstandet zur Schwenkachse angeordneten biegesteifen, aber torsionsweichen Querstrebe, deren Enden mit den Längslenkern verschweißt sind.

Eine derartige Verbundlenker-Hinterachse beschreibt die unveröffentlichte Patentanmeldung P 44 16 725.3, bei der eine als Rohrprofil ausgebildete Querstrebe an ihren beiden Enden mit den Längslenkern verschweißt ist. Dazu ist am jeweiligen Längslenker ein rohrförmiger Ansatz vorgesehen, welcher an der Schweißstelle eine etwa gleiche Querschnittsform wie das Rohrprofilende aufweist. Um die an der Querstrebe im Fahrbetrieb wechselseitig wirkenden hohen Torsions- und Biegemomente gleichmäßig in die Längslenker einzuleiten, ist der jeweilige Längslenker einstückig mit dem Ansatz ausgebildet. Eine derartige Verbundlenker-Hinterachse besitzt eine hohe Tragfähigkeit, sie weist jedoch andererseits auch ein relativ hohes Gewicht auf, da ihre Längslenker aus einem mit der Querstrebe schweißbaren Eisenmetall hergestellt sein müssen.

Der vorliegenden Erfindung liegt daher die Aufgabe zugrunde, eine Verbundlenker-Hinterachse hoher Tragfähigkeit zu schaffen, deren Gewicht und Herstellungsaufwand gegenüber herkömmlichen Verbundlenker-Hinterachsen wesentlich reduziert sind.

Diese Aufgabe wird dadurch gelöst, daß der jeweilige Längslenker einen Grundkörper aus einem Leichtmetall aufweist und die Querstrebe am jeweiligen Ende mit einem in den Grundkörper formschlüssig eingegossenen oder eingeformten Einlegeteil aus einem Eisenmetall verschweißt ist. Eine derart ausgebildete Verbundlenker-Hinterachse weist im Vergleich zu bekannten Konstruktionen, deren Längslenker vollständig aus Eisenmetall, beispielsweise einem Stahlguß, bestehen, bei etwa gleicher Festigkeit und Tragfähigkeit ein wesentlich geringeres Gewicht auf, was sich insbesondere auf die Verbesserung der Fahreigenschaften und die Reduzierung des Kraftstoffverbrauchs auswirkt.

Der Grundkörper des Längslenkers kann relativ einfach und kostengünstig aus einer Aluminium- und/oder Magnesiumlegierung nach dem Thixoforming-Verfahren mit einer nachfolgenden Wärmebehandlung hergestellt sein, bei dem durch niedrige Fülltemperaturen ein sehr homogenes Gefüge mit hoher mechanischer Beanspruchbarkeit erreichbar ist. Da sich das Einlegeteil gegenüber anderen Gießverfahren beim Thixoformen des Grundkörpers wärmebedingt weniger ausdehnt, ist es beim Abkühlen des Gießmaterials stärkeren Schrumpfspannungen ausgesetzt, wodurch eine besonders feste Verbindung zwischen dem Grundkörper und dem Einlegeteil zustande kommt. Um dabei homogene Schrumpfprozesse zu erreichen, ist es besonders wichtig, daß das Einlegeteil im eingegossenen Bereich keine großen Formänderungen bzw. Durchmesserunterschiede aufweist, da die Aluminium- und/oder Magnesiumlegierung beim Abkühlen stärker als das Eisenmetall schrumpft und dadurch ungleichmäßige Schrumpfspannungen am Grundkörper sowie am Einlegeteil verursachen und so zu Vorschäden an der Verbindung zwischen dem Grundkörper und dem Einlegeteil führen könnte.

Erfindungsgemäß ist vorgesehen, daß das Einlegeteil als ein Rohrteil aus Stahlwerkstoff mit einer zumindest bereichsweise nicht konstanten Querschnittsgeometrie ausgebildet ist, wobei sich alle Querschnitts- und Wandstärkenveränderungen durch homogene bzw. fließende Übergänge auszeichnen. Zur Erhöhung des Formschlusses weicht die Außenkontur der Querschnittsfläche des Rohrteils im eingegossenen Bereich zumindest bereichsweise geringfügig von der Kreisform ab. Eine derartige Abweichung kann durch symmetrisch angeordnete oder gleichmäßig an der Oberfläche des Rohrteils verteilte Ausprägungen und/oder Einprägungen bzw. axial ausgerichtete Wellenformen gebildet sein. Wichtig dabei ist, daß der Übergangsbereich zwischen jeweils zwei benachbarten Ausprägungen und/oder Einprägungen bzw. Wellen fließend gestaltet ist. Dadurch werden die negativ auf die kraft- und/oder formschlüssige Verbindung des Rohrteils mit dem Grundkörper wirkenden Spannungsspitzen vermieden, da sich die beim Abkühlen des Gießmaterials entstehenden Schrumpfspannungen gleichmäßig auf der Oberfläche bzw. am Umfang des Rohrteils verteilen.

Das Eingießen eines Einlegeteils in ein Druckgußteil aus Leichtmetall an der Stelle einer späteren Schweißverbindung ist zwar aus der DE 43 26 535 A1 bekannt, jedoch ist eine derartige Verbindung nicht geeignet, hohe, wechselseitig wirkende Torsions- und Biegemomente, welche bei einer Querstrebe einer Verbundlenker-Hinterachse wirken, zu übertragen. Nach der DE 43 26 535 A1 ist das Einlegeteil ringförmig ausgebildet und dichtend in die Wandung eines Aluminium-Druckgußteils eingegossen. Zur Erhöhung des Formschlusses ist das Einlegeteil über seinen gesamten Umfang mit Löchern versehen. Das flüssige Gießmaterial tritt durch diese Löcher hindurch und bildet auf diese Weise bei der Verfestigung Querstege aus, welche das Einlegeteil im Druckgußteil festhalten.

Beim Abkühlen des Gießmaterials schrumpft die Wandung des Druckgußteils, so daß Schrumpfspannungen entstehen, welche radial ausgerichtet einen bestimmten Druck auf die Oberfläche des Einlegeteils ausüben. Der Schrumpfprozeß führt weiterhin dazu, daß sich ein Spalt im Bereich der inneren Umfangsfläche zwischen der Wandung und dem Einlegeteil bildet. Da die in den Löchern befindlichen Stege das Gießmaterial außerhalb des Einlegeteils mit dem Gießmaterial innerhalb des Einlegeteils verbinden, werden diese beim Abkühlen auf Zug belastet. Es entstehen somit ungleichmäßig verteilte Spannungen im und um das Einlegeteil, insbesondere im Bereich der Löcher, so daß im Falle der Einwirkung von hohen, wechselseitig wirkenden Torsions- und Biegemomenten auf das Einlegeteil, so wie sie an der Verbindung zwischen Längslenker und Querstrebe an Verbundlenkerachsen auftreten, eine Gefahr der Lösung des Einlegeteils von der Wandung bzw. der Abscherung der Stege auftreten würde.

Das erfindungsgemäße Rohrteil läßt sich sehr gut mit der Querstrebe verschweißen, beispielsweise nach dem Magnet-Arc-Schweißverfahren, wenn der Querschnitt der das Rohrteil und die Querstrebe verbindenden Schweißstelle rotationssymmetrisch ausgebildet ist, wobei die Durchmesser und die Wandstärken von Rohrteil und Querstrebe jeweils etwa gleich ausgebildet sind. Zur Erhöhung der Festigkeit der Schweißverbindung können der Durchmesser und die Wandstärke des Rohrteils an der Schweißstelle im Vergleich zum Durchmesser und zur Wandstärke im eingegossenen Bereich durch gleichmäßige Verformung vergrößert ausgebildet sein.

Gemäß einer alternativen Ausbildung der Erfindung kann das Rohrteil im eingegossenen Bereich an dem der Schweißstelle zugewandten Ende kreisrund und am anderen Ende ellipsen- oder ovalförmig gestaltet sein, wobei der Übergangsbereich zwischen dem kreisrunden und dem ellipsen- oder ovalförmigen Querschnitt gleichmäßig bzw. fließend gestaltet ist. Ein derartiges Rohrteil weist keine fertigungstechnisch bedingten, die Festigkeit der Verbindung mit dem Grundkörper negativ beeinflussenden Kerbwirkungen auf und kann besonders kostengünstig hergestellt werden.

Zur Erhöhung des Formschlusses zwischen dem Grundkörper und dem Rohrteil kann der Innenraum des Rohrteils zumindest an dem von der Schweißstelle abgewandten Ende und zumindest im Bereich des Innenumfangs vom Gießmaterial ausgefüllt sein. Dadurch können insbesondere die am Rohrteil in diesem Bereich befindlichen Aus- bzw. Einprägungen trotz des Schrumpfens des Gießmaterials formschlüssig im Grundkörper verankert werden.

Eine weitere Verbesserung der Verbindung zwischen dem Rohrteil und dem Längslenker besteht darin, daß der vor dem eingegossenen Bereich befindliche Spalt zwischen dem Rohrteil und dem Grundkörper ringsum durch ein Abdicht- bzw. Korrosionsschutzmittel ausgefüllt oder abgedichtet ist. Als Abdicht- oder Korrosionsschutzmittel können beispielsweise Gummi, Silikon oder elastischer Kunststoff verwendet werden. Dadurch wird das Eindringen von Wasser in den Spalt und somit auch eine Rostbildung an dieser Stelle vermieden.

Die Haltbarkeit der Verbundlenker-Hinterachse kann noch weiter gesteigert werden, wenn das Rohrteil alleine oder zusammen mit dem Grundkörper und/oder der Querstrebe mit einem Korrosionsschutzmittel bearbeitet bzw. beschichtet ist. Dazu eignen sich besonders an sich bekannte Beschichtungen aus Aluminium, Zink oder ähnlichem Material. Die Längslenker können auch zusammen mit den Einlegeteilen alleine oder zusammen mit der Querstrebe mit einem Oberflächenschutz auf Kunststoffbasis versehen werden.

Bei der erfindungsgemäßen Verbundlenker-Hinterachse können noch weitere, die Achsbewegungen bestimmende Bauelemente, wie beispielsweise Stoßdämpfer, am Längslenker angelenkt, abgestützt oder befestigt werden, wenn im Grundkörper mindestens ein weiteres Einlegeteil kraft- und/oder formschlüssig eingegossen ist. Dieses Einlegeteil kann als ein Rohrteil wie vorstehend beschrieben ausgebildet sein und endseitig eine Aufnahme für ein Stoßdämpfergelenk aufweisen.

Die Erfindung wird anhand der Zeichnung näher erläutert. Diese zeigt teilweise schematisch in
- Fig. 1: eine perspektivische Ansicht einer erfindungsgemäßen Verbundlenker-Hinterachse, bei der die radtragenden Längslenker mittels einer biegesteifen, aber torsionsweichen Querstrebe miteinander verschweißt sind;
- Fig. 2: eine Ansicht eines Längslenkers nach Fig. 1, welcher aus Leichtmetall besteht und ein eingegossenes Rohrteil zum Verschweißen mit der Querstrebe aufweist;
- Fig. 3: einen Schnitt gemäß Linie B-B in Fig. 2;
- Fig. 4: zwei Ansichten des Rohrteils nach Fig. 2 und 3, teilweise geschnitten;
- Fig. 5 bis Fig. 7: alternative Ausbildungen des Rohrteils zum Eingießen bzw. Einformen in die jeweiligen Längslenker.

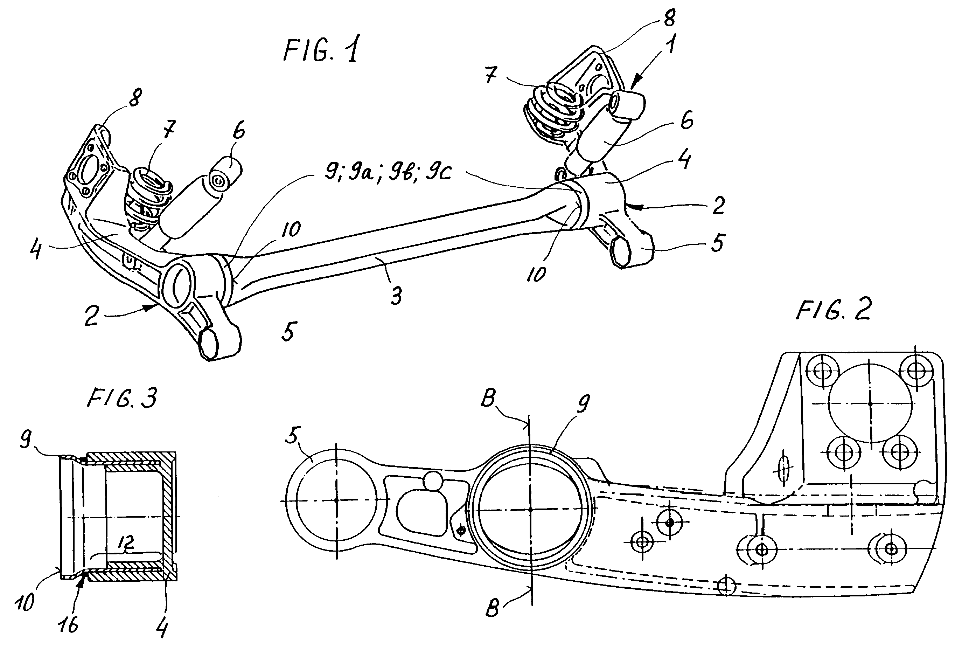

Die in Fig. 1 teilweise dargestellte Verbundlenker-Hinterachse 1 besteht im wesentlichen aus zwei radführenden Längslenkern 2 und einer die beiden Längslenker 2 verbindenden Querstrebe 3. Die Längslenker 2 weisen jeweils einen Grundkörper 4 auf, welcher aus einem Leichtmetall besteht und an seinem vorderen Ende mit einem Lagerauge 5 am nicht dargestellten Fahrzeugaufbau elastisch angelenkt ist. Mit 6 sind die Stoßdämpfer und mit 7 die Federn bezeichnet, die zwischen den Längslenkern 2 und dem Fahrzeugaufbau angeordnet sind. Am rückwärtigen Ende des Grundkörpers 4 ist eine Aufnahme 8 zur Verbindung mit einem nicht dargestellten Radträger zur Lagerung eines Fahrzeugrades vorgesehen.

Die Querstrebe 3 besteht aus einem Rohrprofil, das in seinem mittleren Bereich zu einem biegesteifen, aber torsionsweichen Querschnitt und an seinen beiden Enden zu einem torsionssteifen rohrförmigen Querschnitt verformt ist. Am jeweiligen Ende ist die Querstrebe 3 kreisrund ausgebildet und mit einem Rohrteil 9 verschweißt, welches, wie in Fig. 2 und 3 verdeutlicht, in den jeweiligen Grundkörper 4 kraft- und formschlüssig eingegossen ist. Der kreisförmige Spalt 16 vor dem eingegossenen Bereich 12 ist dabei zum Korrosionsschutz ringsum mit einem dichtenden Medium ausgefüllt. Diese Maßnahme wird naturgemäß erst nach dem Verschweißen mit der Querstrebe 3 durchgeführt.

Das Rohrteil 9 weist im Bereich der Schweißstelle 10 einen ebenfalls kreisrunden Querschnitt auf, wobei die Wandstärke und der Durchmesser in diesem Bereich etwa der Wandstärke und dem Durchmesser des Rohrprofilendes (Strebe 3) entsprechen. Im eingegossenen Bereich 12, innerhalb des Grundkörpers 4, ist die Querschnittsfläche des Rohrteils 9 nicht konstant ausgebildet. Wie in Fig. 3 und 4 dargestellt, ist die Außenkontur 11 der Querschnittsfläche im Bereich der Schweißstelle 10 kreisrund und am anderen Ende 15 ovalförmig ausgebildet, wobei der Übergang zwischen diesen beiden Querschnittsformen gleichmäßig bzw. fließend gestaltet ist. Zur Erhöhung der Stabilität der Verbindung ist der Innenraum des Rohrteils 9 am eingegossenen Ende 15 zum Teil mit Gießmaterial ausgefüllt. Auf diese Weise wird auch die Innenfläche bzw. die innere Umfangsfläche des Rohrteils 9 in diesem ovalförmigen Bereich zumindest formschlüssig mit dem Grundkörper 4 verbunden.

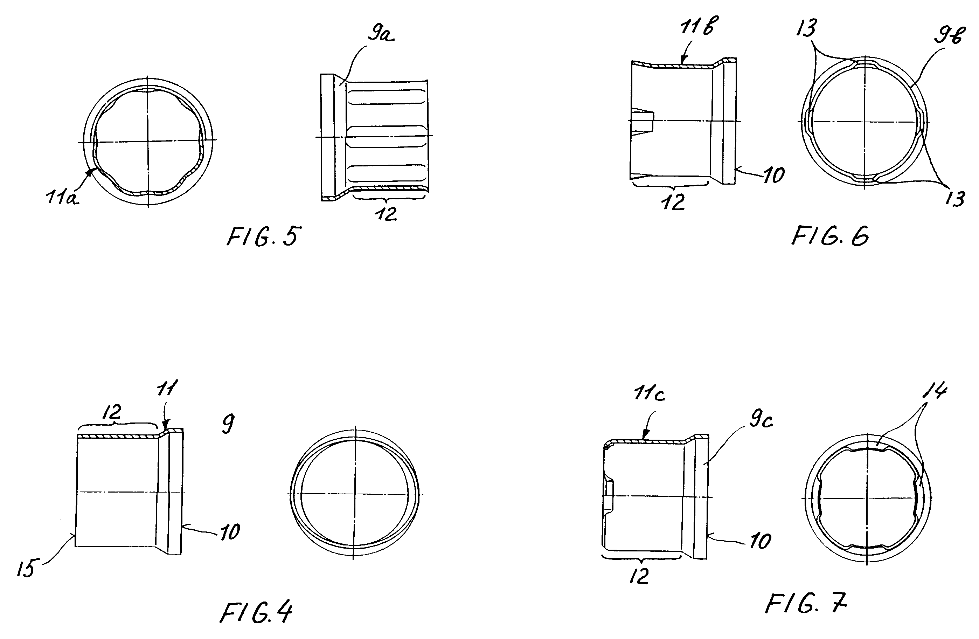

Bei der Ausbildung des Rohrteils 9a nach Fig. 5 ist die Außenkontur 11a der Querschnittsfläche im zum Eingießen vorgesehenen Bereich 12 wellenförmig ausgebildet. Die Wellen sind in Längsrichtung des Rohrteils 9a ausgerichtet und weisen eine geringe Höhe auf, um beim Eingießen in den Grundkörper 4 eine gleichmäßige Schrumpfspannung auf der Oberfläche zu erreichen.

Das Rohrteil 9b in Fig. 6 ist dagegen im zum Eingießen vorgesehenen Bereich 12 überwiegend kreisrund ausgebildet, lediglich am von der Schweißstelle 10 entfernten Ende sind zur Erhöhung des Formschlusses vier gleichmäßig am Umfang verteilte taschenförmige Ausprägungen 13 vorgesehen. An der Stelle der Ausprägungen 13 können, wie in Fig. 7 gezeigt, am Rohrteil 9c Einprägungen 14 vorgesehen sein. Derartig ausgebildete Rohrteile 9b, 9c sind mit dem Grundkörper 4 überwiegend durch Kraft- bzw. Reibschluß verbunden.

## Patentansprüche

1. Verbundlenker-Hinterachse für Kraftfahrzeuge mit zwei radtragenden, schwenkbar am Aufbau angelenkten starren Längslenkern, welche zumindest um eine quer zur Fahrtrichtung angeordnete Schwenkachse schwingen, und einer zwischen den Längslenkern parallel und beabstandet zur Schwenkachse angeordneten biegesteifen, aber torsionsweichen Querstrebe, deren Enden mit den Längslenkern verschweißt sind, **dadurch gekennzeichnet**, daß der jeweilige Längslenker (2) einen Grundkörper (4) aus einem Leichtmetall aufweist und die Querstrebe (3) am jeweiligen Ende mit einem in den Grundkörper (4) kraft- und/oder formschlüssig eingegossenen bzw. eingeformten Einlegeteil (9; 9a; 9b; 9c) aus einem Eisenmetall verschweißt ist.

2. Verbundlenker-Hinterachse nach Anspruch 1, **dadurch gekennzeichnet**, daß das Einlegeteil (9; 9a; 9b; 9c) und die Querstrebe (3) zumindest an den zueinander zugewandten Enden rohrförmig ausgebildet sind.

3. Verbundlenker-Hinterachse nach Anspruch 1 oder 2, **dadurch gekennzeichnet**, daß das Einlegeteil (9; 9a; 9b; 9c) als ein Rohrteil (9; 9a; 9b; 9c) mit einer zumindest bereichsweise nicht konstanten Querschnittsgeometrie ausgebildet ist, wobei sich alle Querschnitts- und Wandstärkenveränderungen durch homogene bzw. fließende Übergänge auszeichnen.

4. Verbundlenker-Hinterachse nach einem der Ansprüche 1 bis 3, **dadurch gekennzeichnet**, daß der Querschnitt im Bereich der das Rohrteil (9; 9a; 9b; 9c) und die Querstrebe (3) verbindenden Schweißstelle (10) eine rotationssymmetrische Form aufweist.

5. Verbundlenker-Hinterachse nach einem der Ansprüche 1 bis 4, **dadurch gekennzeichnet**, daß der Durchmesser und/oder die Wandstärke des Rohrteils (9; 9a; 9b; 9c) am zur Querstrebe zugewandten Ende im Vergleich zum Durchmesser und/oder zur Wandstärke im eingegossenen Bereich (12) durch gleichmäßige Verformung vergrößert ausgebildet sind.

6. Verbundlenker-Hinterachse nach einem der Ansprüche 1 bis 5, **dadurch gekennzeichnet**, daß die Durchmesser und die Wandstärken von Rohrteil (9; 9a; 9b; 9c) und Querstrebe (3) an der Schweißstelle (10) jeweils etwa gleich ausgebildet sind.

7. Verbundlenker-Hinterachse nach einem der Ansprüche 1 bis 6 **dadurch gekennzeichnet**, daß die Außenkontur (11; 11a; 11b; 11c) der Querschnittsfläche des Rohrteils (9; 9a; 9b; 9c) im eingegossenen Bereich (12) zumindest bereichsweise geringfügig von der Kreisform abweicht.

8. Verbundlenker-Hinterachse nach einem der Ansprüche 1 bis 7, **dadurch gekennzeichnet**, daß an der Oberfläche des Rohrteils (9a; 9b; 9c) im eingegossenen Bereich (12) zumindest bereichsweise symmetrisch oder gleichmäßig am Umfang des Rohrteils (9a; 9b; 9c) angeordnete Ausprägungen (13) und/oder Einprägungen (14) vorgesehen sind, wobei jeder Übergangsbereich zwischen jeweils zwei benachbarten Ausprägungen (13) bzw. Einprägungen (14) fließend gestaltet ist.

9. Verbundlenker-Hinterachse nach einem der Ansprüche 1 bis 7, **dadurch gekennzeichnet**, daß an der Oberfläche des Rohrteils (9a) im eingegossenen Bereich (12) zumindest bereichsweise axial ausgerichtete, symmetrisch oder gleichmäßig am Umfang des Rohrteils (9a) angeordnete Wellen ausgebildet sind, wobei der Übergangsbereich zwischen jeweils zwei benachbarten Wellen fließend gestaltet ist.

10. Verbundlenker-Hinterachse nach einem der Ansprüche 1 bis 7, **dadurch gekennzeichnet**, daß das Rohrteil (9) im eingegossenen Bereich (12) an dem zur Schweißstelle (10) zugewandten Ende kreisrund und am anderen Ende (15) ellipsen- oder ovalförmig gestaltet ist, wobei der Übergangsbereich zwischen dem kreisrunden Querschnitt und dem ellipsen- oder ovalförmigen Querschnitt gleichmäßig bzw. fließend gestaltet ist.

11. Verbundlenker-Hinterachse nach einem der Ansprüche 1 bis 7, **dadurch gekennzeichnet**, daß das Rohrteil (9b; 9c) im eingegossenen Bereich (12) überwiegend mit einem kreisrunden Querschnitt ausgebildet ist, wobei an dem von der Schweißstelle (10) abgewandten Ende bereichsweise Aus- und/oder Einprägungen (13, 14) vorgesehen sind.

12. Verbundlenker-Hinterachse nach einem der Ansprüche 1 bis 11, **dadurch gekennzeichnet**, daß der Innenraum des Rohrteils (9; 9a; 9b; 9c) zumindest an dem von der Schweißstelle (10) abgewandten Ende zumindest im Bereich des geformten Innenumfangs vom Gießmaterial ausgefüllt ist.

13. Verbundlenker-Hinterachse nach einem der Ansprüche 1 bis 12, **dadurch gekennzeichnet**, daß der Grundkörper (4) überwiegend aus einer Aluminium- und/oder Magnesiumlegierung und das eingegossene Einlegeteil (9; 9a; 9b; 9c) aus einem mit der Querstrebe schweißbaren Stahl- oder Gußwerkstoff bestehen.

14. Verbundlenker-Hinterachse nach Anspruch 13, **dadurch gekennzeichnet**, daß der Grundkörper (4) des Längslenkers (2) nach dem Thixoforming-Verfahren hergestellt ist.

15. Verbundlenker-Hinterachse nach einem der Ansprüche 1 bis 14, **dadurch gekennzeichnet**, daß im Grundkörper (4) zum Verbinden mit einem die Achsbewegungen bestimmenden Bauelement wie Schenkel, Lenker, Stoßdämpfer (6) oder Feder (7) mindestens ein weiteres Rohrteil (9; 9a; 9b; 9c) kraft- und/oder formschlüssig eingegossen oder eingeformt ist.

16. Verbundlenker-Hinterachse nach einem der Ansprüche 1 bis 15, **dadurch gekennzeichnet**, daß nur das Rohrteil (9; 9a; 9b; 9c) oder das Rohrteil (9; 9a; 9b; 9c) zusammen mit dem Grundkörper (4) und/oder der Querstrebe (3) mit einem Korrosionsschutzmittel bearbeitet bzw. beschichtet ist.

17. Verbundlenker-Hinterachse nach einem der Ansprüche 1 bis 16, **dadurch gekennzeichnet**, daß der vor dem eingegossenen Bereich (12) befindliche Spalt (16) zwischen dem Rohrteil (9; 9a; 9b; 9c) und dem Grundkörper (4) ringsum durch ein Abdicht- bzw. Korrosionsschutzmittel ausgefüllt oder abgedichtet ist.

## Claims

1. Twist-beam rear axle for motor vehicles with two wheel-carrying rigid longitudinal control arms which are linked pivotably to the body and which swing at least about a pivot axis arranged transversely to the direction of travel, and a bending-resistant but torsionally soft dross strut which is arranged between the longitudinal control arms parallel to and at a distance from the pivot axis and whose ends are welded to the longitudinal control arms, characterised in that the respective longitudinal control arm (2) comprises a main body (4) made of a lightweight metal and the cross strut (3) is welded at the respective end to an insert (9; 9a; 9b; 9c) made of a ferrous metal and cast or formed integrally in the main body (4) in force-locking and/or form-locking relationship.

2. Twist-beam rear axle according to claim 1, characterised in that the insert (9; 9a; 9b; 9c) and the cross strut (3) are of tubular construction at least at the ends facing towards each other.

3. Twist-beam rear axle according to claim 1 or 2, characterised in that the insert (9; 9a; 9b; 9c) is constructed as a tube portion (9; 9a; 9b; 9c) with a cross-sectional geometry which is not constant at least in some regions, all changes of cross-section and wall thickness being distinguished by homogeneous or progressive transitions.

4. Twist-beam rear axle according to any of claims 1 to 3, characterised in that the cross-section has a rotationally symmetrical shape in the region of the weld (10) connecting the tube portion (9; 9a; 9b; 9c) and the cross strut (3).

5. Twist-beam rear axle according to any of claims 1 to 4, characterised in that the diameter and/or the wall thickness of the tube portion (9; 9a; 9b; 9c) at the end facing towards the cross strut is enlarged by uniform deformation compared with the diameter and/or wall thickness in the integrally cast region (12).

6. Twist-beam rear axle according to any of claims 1 to 5, characterised in that the diameters and the wall thicknesses of tube portion (9; 9a; 9b; 9c) and cross strut (3) at the weld (10) are in each case approximately the same.

7. Twist-beam rear axle according to any of claims 1 to 6, characterised in that the outer contour (11; 11a; 11b; 11c) of the cross-sectional area of the tube portion (9; 9a; 9b; 9c) in the integrally cast region (12) deviates slightly from the circular shape at least in some regions.

8. Twist-beam rear axle according to any of claims 1 to 7, characterised in that at the surface of the tube portion (9a; 9b; 9c) in the integrally cast region (12) at least in some regions are provided bulges (13) and/or indentations (14) arranged symmetrically or evenly on the circumference of the tube portion (9a; 9b; 9c), each transition region between in each case two adjacent bulges (13) or indentations (14) being progressive.

9. Twist-beam rear axle according to any of claims 1 to 7, characterised in that at the surface of the tube portion (9a) in the integrally cast region (12) at least in some regions are provided axially oriented undulations arranged symmetrically or evenly on the circumference of the tube portion (9a), the transition region between in each case two adjacent undulations being progressive.

10. Twist-beam rear axle according to any of claims 1 to 7, characterised in that the tube portion (9) in the integrally cast region (12) is round at the end facing towards the weld (10) and elliptical or oval at the other end (15), the transition region between the round cross-section and the elliptical or oval cross-section being uniform or progressive.

11. Twist-beam rear axle according to any of claims 1 to 7, characterized in that the tube portion (9b; 9c) in the integrally cast region (12) is designed mainly with a round cross-section, bulges and/or indentations (13, 14) being provided in some regions at the end facing away from the weld (10).

12. Twist-beam rear axle according to any of claims 1 to 11, characterized in that the interior of the tube portion (9; 9a; 9b; 9c) is filled with casting material at least at the end facing away from the weld (10) at least in the region of the shaped inner circumference.

13. Twist-beam rear axle according to any of claims 1 to 12, characterized in that the main body (4) is made mainly of an aluminium and/or magnesium alloy and the integrally cast insert (9; 9a; 9b; 9c) is made of a steel or casting material that can be welded to the cross strut.

14. Twist-beam rear axle according to claim 13, characterized in that the main body (4) of the longitudinal control arm (2) is made by thixoforming.

15. Twist-beam rear axle according to any of claims 1 to 14, characterized in that at least one additional tube portion (9; 9a; 9b; 9c) is cast or formed integrally in the main body (4) in force-locking and/or form-locking relationship for connection to a structural member which determines the axle movements such as arm, link, shock absorber (6) or spring (7).

16. Twist-beam rear axle according to any of claims 1 to 15, characterized in that only the tube portion (9; 9a; 9b; 9c) or the tube portion (9; 9a; 9b; 9c) together with the main body (4) and/or the cross strut (3) is treated or coated with an anticorrosion agent.

17. Twist-beam rear axle according to any of claims 1 to 16, characterized in that the gap (16) between the tube portion (9; 9a; 9b; 9c) and the main body (4), which is located in front of the integrally cast region (12), is filled or sealed off all round with a sealing or anticorrosion agent.

## Revendications

1. Essieu arrière à traverse déformable en torsion pour véhicules automobiles, comprenant deux bras oscillants longitudinaux rigides qui portent les roues, sont montés pivotants sur la structure et oscillent au moins autour d'un axe de pivotement orienté transversalement à la direction de déplacement, ainsi qu'une traverse rigide en flexion mais souple en torsion, qui est disposée entre les bras oscillants longitudinaux, parallèlement à l'axe de pivotement et à distance de celui-ci, et dont les extrémités sont soudées aux bras oscillants longitudinaux, caractérisé par le fait que chaque bras oscillant (2) comporte un corps de base (4) en un alliage léger et que la traverse (3), à l'extrémité concernée, est soudée à un insert (9; 9a; 9b; 9c) en un métal ferreux, inséré par moulage ou par formage et lié par adhérence et/ou par obstacle au corps de base (4).

2. Essieu arrière à traverse déformable en torsion selon la revendication 1, caractérisé par le fait que l'insert (9, 9a; 9b; 9c) et la traverse (3), au moins à leurs extrémités mutuellement en vis-à-vis, ont une conformation tubulaire.

3. Essieu arrière à traverse déformable en torsion selon la revendication 1 ou 2, caractérisé par le fait que l'insert (9, 9a; 9b; 9c) est un élément tubulaire (9; 9a; 9b; 9c) avec une forme en section transversale non constante par endroits au moins, tous les changements de section et d'épaisseur de paroi étant caractérisés par des transitions homogènes ou progressives.

4. Essieu arrière à traverse déformable en torsion selon une des revendications 1 à 3, caractérisé par le fait que la section transversale dans la région de la soudure (10) qui relie l'élément tubulaire (9; 9a; 9b; 9c) à la traverse (3) présente une forme symétrique de révolution.

5. Essieu arrière à traverse déformable en torsion selon une des revendications 1 à 4, caractérisé par le fait que le diamètre et/ou l'épaisseur de paroi de l'élément tubulaire (9; 9a; 9b; 9c) à l'extrémité côté traverse est augmenté par déformation régulière par rapport au diamètre et/ou à l'épaisseur dans la partie insérée (12).

6. Essieu arrière à traverse déformable en torsion selon une des revendications 1 à 5, caractérisé par le fait que les diamètres et/ou les épaisseurs de paroi de l'élément tubulaire (9; 9a; 9b; 9c) et de la traverse, (3) au niveau de la soudure (10), sont sensiblement identiques.

7. Essieu arrière à traverse déformable en torsion selon une des revendications 1 à 6, caractérisé par le fait que la forme extérieure (11; 11a; 11b; 11c) de la section transversale de l'élément tubulaire (9; 9a; 9b; 9c), dans la partie insérée (12) s'écarte légèrement de la forme circulaire par endroits au moins.

8. Essieu arrière à traverse déformable en torsion selon une des revendications 1 à 7, caractérisé par le fait que des formes en saillie vers l'extérieur (13) et/ou des formes en saillie vers l'intérieur (14) disposées localement de manière symétrique ou uniformément réparties sur le pourtour de l'élément tubulaire (9a; 9b; 9c) sont prévues dans la surface de l'élément tubulaire (9a, 9b; 9c), dans la partie insérée (12), la zone de raccordement entre deux formes en saillie vers l'extérieur (13) ou vers l'intérieur (14) consécutives étant progressive.

9. Essieu arrière à traverse déformable en torsion selon une des revendications 1 à 7, caractérisé par le fait que des ondes (14) orientées au moins localement dans la direction axiale sont disposées de manière symétrique ou uniformément répartie sur le pourtour de l'élément tubulaire (9a) dans la surface de l'élément tubulaire (9a), dans la partie insérée (12), la zone de raccordement entre deux ondes consécutives étant progressive.

10. Essieu arrière à traverse déformable en torsion selon une des revendications 1 à 7, caractérisé par le fait que l'élément tubulaire (9), dans la partie insérée (12), est circulaire à l'extrémité tournée vers la soudure (10) et présente une forme d'ellipse ou d'ovale à son autre extrémité (15), la zone de raccordement entre la section circulaire et la section ellipsoïdale ou ovale étant régulière ou progressive.

11. Essieu arrière à traverse déformable en torsion selon une des revendications 1 à 7, caractérisé par le fait que dans la partie insérée (12), l'élément tubulaire (9b, 9c), à son extrémité tournée vers la soudure (10), a essentiellement une section circulaire, des formes en saillie vers l'extérieur et/ou vers l'intérieur (13, 14) étant prévues par endroits à l'extrémité éloignée de la soudure (10).

12. Essieu arrière à traverse déformable en torsion selon une des revendications 1 à 11, caractérisé par le fait que l'espace intérieur de l'élément tubulaire (9; 9a; 9b; 9c), au moins à l'extrémité éloignée de la soudure (10), au moins dans la zone de la paroi intérieure façonnée, est rempli de matériau de moulage.

13. Essieu arrière à traverse déformable en torsion selon une des revendications 1 à 12, caractérisé par le fait que le corps de base (4) est essentiellement en un alliage à base d'aluminium et/ou de magnésium et que l'insert (9; 9a; 9b; 9c) inséré au moulage est en acier ou en un matériau moulé soudable avec la traverse.

14. Essieu arrière à traverse déformable en torsion selon la revendication 13, caractérisé par le fait que le corps de base (4) du bras longitudinal (2) est fabriqué selon le procédé dit de thixoformage.

15. Essieu arrière à traverse déformable en torsion selon une des revendications 1 à 14, caractérisé par le fait qu'au moins un élément tubulaire (9; 9a; 9b; 9c) supplémentaire est inséré par moulage ou par formage et lié par adhérence et/ou par obstacle au corps de base (4) à des fins de liaison avec un élément de construction limitant les mouvements de l'essieu tel qu'un bras, une biellette, un amortisseur (6) ou un ressort (7).

16. Essieu arrière à traverse déformable en torsion selon une des revendications 1 à 15, caractérisé par le fait que l'élément tubulaire (9; 9a; 9b; 9c) seul ou l'élément tubulaire (9; 9a; 9b; 9c) et le corps de base (4) et/ou la traverse (3) est/sont traité(s) ou revêtu(s) d'un produit anticorrosion.

17. Essieu arrière à traverse déformable en torsion selon une des revendications 1 à 16, caractérisé par le fait que l'espace en forme de fente (16) entre l'élément tubulaire (9; 9a; 9b; 9c) et le corps de base (4), situé en amont de la partie insérée (12) est rempli ou étanché à l'aide d'un produit d'étanchéité ou d'un produit anti-corrosion.
